# EUROPÄISCHE PATENTSCHRIFT

(11) **EP 2 125 461 B1**
(45) Veröffentlichungstag und Bekanntmachung des Hinweises auf die Patenterteilung: **18.12.2013**
(21) Anmeldenummer: 07821890.6
(22) Anmeldetag: 26.10.2007
(51) Int. Cl.: B60S 1/58

(54) **SCHEIBENWISCHERANORDNUNG AN EINEM FAHRZEUG**
WINDSCREEN WIPER ARRANGEMENT IN A VEHICLE
AGENCEMENT D'ESSUIE-GLACES SUR UN VÉHICULE

(30) Priorität: 18.12.2006 DE 102006059687
(43) Veröffentlichungstag der Anmeldung: 02.12.2009
(73) Patentinhaber: Robert Bosch GmbH, 70442 Stuttgart (DE)
(72) Erfinder: BOHN, Roland, 77815 Buehl (DE)
(86) Internationale Anmeldenummer: PCT/EP2007/061529
(87) Internationale Veröffentlichungsnummer: WO 2008/074557

(56) Entgegenhaltungen:
- WO-A-02/06097
- WO-A-02/06098

## Beschreibung

Die Erfindung betrifft eine Scheibenwischeranordnung an einem Fahrzeug, insbesondere Kraftfahrzeug, mit einer Fahrzeugfensterscheibe, die einen Durchbruch aufweist, der von einer Wischerarmantriebswelle eines Wischerantriebs durchsetzt wird, wobei die Wischerarmantriebswelle in einem Wischerlager um eine Drehachse drehbar lagert, das in einer Lageraufnahme gehalten wird, die mit der Fahrzeugfensterscheibe verbunden ist.

### Stand der Technik

Derartige Scheibenwischeranordnungen an einem Fahrzeug sind zum Beispiel als Heckscheibenwischeranordnungen eines Kraftfahrzeugs bekannt. Dabei weist die Fahrzeugfensterscheibe - bei einer Heckscheibenwischeranordnung die Heckscheibe - einen Durchbruch auf, der von einer Wischerarmantriebswelle durchsetzt wird. Bei Kraftfahrzeugen wie zum Beispiel Minivans oder auch bei Geländewagen können die Heckscheiben bei geschlossener Heckklappe unabhängig von dieser geöffnet werden, um den Zugriff auf einen Stauraum des Kraftfahrzeugs im rückwärtigen Fahrzeugbereich ohne ein Öffnen der Heckklappe zu gestatten. Da die Wischerantriebseinrichtung mit Elektromotor und Getriebe in der Heckklappe angeordnet ist, werden Wischerarmantriebswelle und Antriebseinrichtung beim Öffnen der Heckscheibe voneinander getrennt. Dabei wird mit der Heckscheibe die die Heckscheibe durchsetzende Wischerarmantriebswelle mit den montierten Wischerarm, dem Wischerlager und der Lageraufnahme relativ zur Heckklappe bewegt. Dazu ist die Lageraufnahme mit der Heckscheibe verbunden. Die Verbindung ist zum Beispiel eine Schraubverbindung, eine Nietverbindung, eine Klebverbindung oder eine Klipsverbindung. Die Herstellung dieser Verbindung ist ein zusätzlicher Arbeitsschritt bei der Herstellung der Scheibenwischeranordnung.

Eine gattungsgemäße Scheibenwischeranordung ist aus dem Dokument WO-A-O2/06098 bekannt.

### Offenbarung der Erfindung

Bei der erfindungsgemäßen Scheibenwischeranordnung ist vorgesehen, dass die Lageraufnahme einstückig mit der Fahrzeugfensterscheibe ausgebildet ist. Dazu wird die Fahrzeugfensterscheibe aus einem Material gefertigt, dass eine einstückige Ausbildung der Lageraufnahme mit der Fahrzeugfensterscheibe ermöglicht. Dadurch entfällt die aufwendige Befestigung des Wischerlagers beziehungsweise der Lageraufnahme an der Fahrzeugfensterscheibe.

Weiterhin ist mit Vorteil vorgesehen, dass die Lageraufnahme eine in Richtung der Drehachse der Wischerarmantriebswelle weisende Längserstreckung besitzt, die quer zur Ebene der Fahrzeugfensterscheibe verläuft. Durch diese Anordnung von Wischerarmantriebswelle und Fahrzeugfensterscheibe wird es ermöglicht, auf einem aus dem Fahrzeug herausragenden Endbereich der Wischerarmantriebswelle direkt einen Wischerarm zu montieren. Dieser wird mittels der Wischerarmantriebswelle angetrieben, sodass er zum Beispiel einen Bereich der Fahrzeugfensterscheibe überstreicht, der die Form eines Kreissegments besitzt. Unter einem Verlauf der Wischerarmantriebswelle quer zur Ebene der Fahrzeugfensterscheibe ist ein Verlauf zu verstehen, der ein Durchsetzen der Fahrzeugfensterscheibe mit der Wischerarmantriebswelle ermöglicht. Die Fahrzeugfensterscheibe bildet dabei nicht unbedingt eine "ebene" Ebene im geometrischen Sinne aus. Vielmehr bezieht sich die Ausrichtung der Wischerarmantriebswelle auf die Ebene der Fahrzeugfensterscheibe im Bereich ihres Durchbruchs. Insbesondere ist die Richtung der Drehachse der Wischerarmantriebswelle senkrecht oder annähernd senkrecht auf der Ebene der Fahrzeugfensterscheibe im Berech des Durchbruchs.

Insbesondere ist vorgesehen, dass die Lageraufnahme ein Lagerrohr ist. Ein Lagerrohr ist eine einfach gestaltete Lageraufnahme, die sich besonders einfach einstückig mit der Fahrzeugfensterscheibe ausbilden lässt.

Nach einer Weiterbildung der Erfindung ist vorgesehen, dass das Lagerrohr ein erstes und ein zweites Ende aufweist, wobei das erste Ende einstückig mit der Fahrzeugfensterscheibe verbunden ist und das zweite Ende ein freies Ende bildet. Durch dieses freie Ende kann das Wischerlager und die Wischerarmantriebswelle in das Innere des Lagerrohrs eingesetzt werden.

Erfindungsgemäß ist vorgesehen, dass die Fahrzeugfensterscheibe einschließlich der Lageraufnahme aus Kunststoff, insbesondere Polycarbonat, besteht. Kunststoffe, insbesondere Polycarbonat, weisen ein niedriges Gewicht, eine relativ hohe Stabilität und gute Verarbeitbarkeit auf.

Weiterhin ist mit Vorteil vorgesehen, dass in das Innere des Lagerrohrs das Wischerlager eingeschoben ist. Somit nimmt das Lagerrohr das Wischerlager und die Wischerarmantriebswelle auf.

Insbesondere ist vorgesehen, dass das Wischerlager von mindestens zwei in Richtung der Drehachse hintereinander liegenden Lagerelementen gebildet ist. Diese Lagerelemente liegen vorteilhafterweise beabstandet hintereinander in der Lageraufnahme. Durch diese Anordnung erhält die Wischerarmantriebswelle und der vorzugsweise direkt an der Wischerarmantriebswelle befestigte Wischerarm eine hohe Stabilität.

Nach einer Weiterbildung der Erfindung ist vorgesehen, dass die Fahrzeugfensterscheibe und/oder die Lageraufnahme im Bereich des Durchbruchs der Fahrzeugfensterscheibe eine Aufnahmevertiefung für ein Dichtelement zur Abdichtung der Wischerarmantriebswelle aufweisen. Ist die Aufnahmevertiefung in der Fahrzeugfensterscheibe ausgebildet, so ist die Aufnahmevertiefung insbesondere auf der Innenseite - also der dem Fahrzeuginnenraum zugewandten Seite der Fahrzeugfensterscheibe - angeordnet. Weist die als Lagerrohr ausgebildete Lageraufnahme die Aufnahmevertiefung auf, so ist diese im Bereich des zweiten Endes des Lagerrohrs angeordnet. Insbesondere wird die Aufnahmevertiefung alternativ auch von der Lageraufnahme und der Fahrzeugfensterscheibe gebildet.

Schließlich ist mit Vorteil vorgesehen, dass die Scheibenwischeranordnung im Bereich der Lageraufnahme und/oder der Fahrzeugfensterscheibe eine Axialsicherung zur axialen Sicherung der Wischerarmantriebswelle aufweist. Die Axialsicherung weist insbesondere einen ersten Sicherungsring im Bereich des Durchbruchs der Fahrzeugfensterscheibe und einen zweiten Sicherungsring im gegenüberliegenden Endbereich der Lageraufnahme auf. Bei einer als Lagerrohr ausgebildeten Lageraufnahme ist dieser Endbereich der Bereich des zweiten Endes. Die Wischerarmantriebswelle stützt sich zur axialen Sicherung über die Sicherungsringe einerseits an der Fahrzeugfensterscheibe und andererseits an dem Endbereich der Lageraufnahme ab.

### Kurze Beschreibung der Zeichnungen

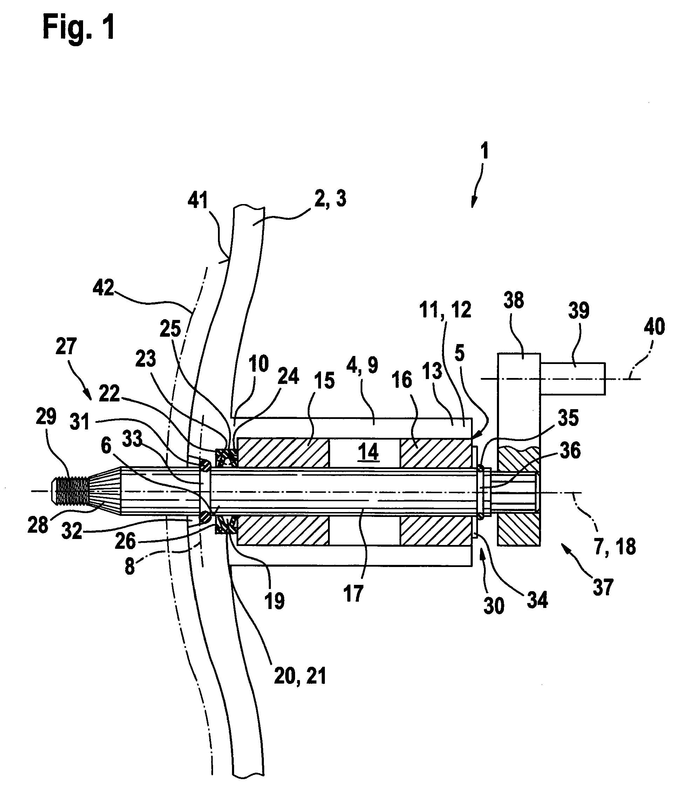

Die Erfindung wird nachfolgend anhand der zugehörigen Zeichnung näher erläutert. Es zeigt:
- Die Figur: eine erfindungsgemäße Scheibenwischeranordnung mit einer Lageraufnahme und einer Fahrzeugfensterscheibe, die einstückig miteinander ausgebildet sind.

### Ausführungsform(en) der Erfindung

Die Figur zeigt eine Scheibenwischeranordnung 1 mit einer als Heckscheibe 2 ausgebildeten Fahrzeugfensterscheibe 3 und mit einer mit der Fahrzeugfensterschreibe 3 einstückig ausgebildeten Lageraufnahme 4 zur Aufnahme eines Wischerlagers 5. Die Lageraufnahme 4 ist im Bereich eines Durchbruchs 6 der Fahrzeugfensterscheibe 3 angeordnet. Die Lageraufnahme 4 weist eine Längserstreckung (Längsachse 7) auf, die quer zur Ebene 8 der Fahrzeugfensterscheibe 3 verläuft. Dabei steht die Längsachse der Lageraufnahme 4 in etwa senkrecht auf der Ebene 8 der Fahrzeugfensterscheibe 3 im Bereich des Durchbruchs 6. Die Lageraufnahme 4 ist als Lagerrohr 9 ausgebildet, das ein erstes Ende 10 aufweist, das einstückig mit der Fahrzeugfensterscheibe 3 verbunden ist. Ein dem ersten Ende 10 gegenüberliegendes zweites Ende 11 des Lagerrohrs 9 ist als freies Ende 12 ausgebildet. Dieses freie Ende 12 ist der Endbereich 13 der Lageraufnahme 4. Im Innern 14 der als Lagerrohr 9 ausgebildeten Lageraufnahme 4 ist das Wischerlager 5 angeordnet. Das Wischerlager 5 besteht aus zwei in Längsrichtung der Lageraufnahme 4 - entlang der Längsachse 7 - hintereinander liegende Lagerelemente 15, 16. Das erste Lagerelement 15 ist im Bereich des ersten Endes 10 und das zweite Lagerelement 16 ist im Bereich des zweiten Endes 11 des Lagerrohrs 9 mit Abstand zum ersten Lagerelement 15 angeordnet. Das Wischerlager 5 nimmt mit seinen Lagerelementen 15, 16 eine Wischerarmantriebswelle 17 auf, deren Drehachse 18 der Längsachse 7 der Lageraufnahme 4 entspricht. Im Bereich des ersten Endes 10 weist die Fahrzeugfensterscheibe 3 eine Aufnahmevertiefung 19 auf. Diese Aufnahmevertiefung 19 erstreckt sich bis zum Innern 14 des Lagerrohrs 9 im Bereich des ersten Endes 10. In der Aufnahmevertiefung 19 liegt ein ringförmiges Dichtelement 20 zur dynamischen Abdichtung der drehbar gelagerten Wischerarmantriebswelle 17 gegenüber der stillstehenden Fahrzeugfensterscheibe 3. Das ringförmige Dichtelement 20 ist dabei als Lippendichtring 21 ausgebildet. Alternativ zur Ausbildung des ringförmigen Dichtelements 20 als Lippendichtring 21 kann dieses auch als O-Ring, Doppel-O-Ring oder Quadring ausgebildet sein. Das ringförmige Dichtelement 20 umgibt radial die Wischerarmantriebswelle 17 und stützt sich axial auf seiner ersten Seite 22 an einem von der Fahrzeugfensterscheibe 3 gebildeten Aufnahmegrund 23 der Aufnahmevertiefung 19 und mit ihrer der ersten Seite 22 gegenüberliegenden zweiten Seite 24 an einer Seitenfläche 25 des ersten Lagerelements 15 ab. Radial stützt sich die ringförmige Dichtung 20 an einer von der Fahrzeugfensterscheibe 3 gebildeten Aufnahmeseitenfläche 26 der Aufnahmevertiefung 19 ab. Ein aus dem Fahrzeug herausragender erster Endbereich 27 der Wischerarmantriebswelle 17 weist zur Befestigung eines nicht dargestellten Wischerarms einen konisch ausgebildeten Bereich 28 mit einer Rändelung und einen Befestigungsbereich 28 auf, auf dem der Wischarm einfach befestigbar ist. Zur axialen Sicherung der Wischerarmantriebswelle 17 im Wischerlager 7 beziehungsweise der Lageraufnahme 4 weist die Scheibenwischeranordnung 1 eine Axialsicherung 30 auf. Die Axialsicherung 30 besteht aus einem ersten Sicherungsring 31, der in einer den Durchbruch 6 umgebenden Ausnehmung 32 so angeordnet ist, dass er in eine erste Ringnut 33 der Wischerarmantriebswelle 17 eingreift. Am zweiten Ende 11 des Lagerrohrs 9 ist eine Ausgleichsscheibe 34 angeordnet, die die Wischerarmantriebswelle 17 radial umgibt. Axial neben der Ausgleichsscheibe 34 ist ein zweiter Sicherungsring 35 angeordnet, der in eine zweite Ringnut 36 der Wischerarmantriebswelle 17 eingreift. Mit dem ersten Sicherungsring 31 stützt sich die Wischerarmantriebswelle 17 einerseits an der Fahrzeugfensterscheibe 3 und mit dem zweiten Sicherungsring 35 an dem zweiten Lagerelement 15 des Wischerlagers 5 ab. Somit ist die Wischerarmantriebswelle 17 über die beiden Sicherungsringe 31, 35 der Axialsicherung 30 axial gesichert. Ein dem ersten Endbereich 27 der Wischerarmantriebswelle 17 gegenüberliegender zweiter Endbereich 37 weist einen Hebel 38 mit einem exzentrisch angeordneten Zapfen 39 auf, der eine Zapfenlängsachse 40 besitzt. Die der Lageraufnahme 4 abgewandte Außenfläche 41 der Fahrzeugfensterscheibe 3 weist die nicht dargestellte, zu wischende Fensterfläche auf. Die Außenfläche 41 ist im Bereich des Durchbruchs 6 partiell mit einer vorzugsweise dunklen Farbschicht 42 versehen. Die Scheibenwischeranordnung 1 ist insbesondere für Heckscheiben 2 von Fahrzeugen vorgesehen, die unabhängig von der zugeordneten Heckklappe geöffnet und geschlossen werden kann. Dies ermöglicht einen Zugriff auf den rückwärtigen Fahrzeuginnenbereich auch bei beengten Raumverhältnissen, bei denen ein Öffnen beziehungsweise Hochschwenken der vollständigen Heckklappe nicht möglich sein sollte. Bei derartigen Fahrzeugen ist die Scheibenwischeranordnung 1 vollständig von der in der Heckklappe angeordneten Wischerantriebseinheit trennbar. Wird die Heckscheibe 2 ohne die Heckklappe geöffnet, wird der Zapfen 39 aus einem entsprechenden Gegenelement der Wischerantriebseinrichtung herausgezogen und somit die Scheibenwischeranordnung 1 und der Wischerarm von der Wischerantriebseinrichtung getrennt.

Die erfindungsgemäße Scheibenwischeranordnung mit einstückig mit der Fahrzeugfensterscheibe 3 ausgebildeter Lageraufnahme 4 für das Wischerlager 5 hat gegenüber einer herkömmlichen Scheibenwischeranordnung den Vorteil, dass der Montageschritt der Befestigung der Lageraufnahme 4 an der Fahrzeugfensterscheibe 3 entfällt. Zusätzlich kann die dynamische Dichtung der Wischerarmantriebswelle 17 im Bereich des Durchbruchs 6 der Fahrzeugfensterscheibe 3 direkt im Bereich der Fahrzeugfensterscheibe 3 erfolgen. Dazu bildet die Fahrzeugfensterscheibe 3 eine Aufnahmevertiefung 19 für das Dichtelement 20 aus oder zumindest mit aus. Das Dichtelement 20 kann direkt durch den Innenraum 13 der Lageraufnahme 4 in die Aufnahmevertiefung 19 eingesetzt werden. Anschließend werden die Lagerelement 15, 16 des Wischerlagers 5 in der Lageraufnahme 4 montiert. Nach der Montage des Wischerlagers 5 wird die Wischerarmantriebswelle 17 - vorzugsweise vom Fahrzeuginnenraum her - in das Wischerlager 5 eingesetzt und mittels der Axialsicherung 30 axial gesichert.

Die Fahrzeugfensterscheibe 3 einschließlich der Lageraufnahme 4 besteht aus Polycarbonat. Dieser Kunststoff weist ein niedriges Gewicht, eine relativ hohe Stabilität und gute Verarbeitbarkeit auf und eignet sich daher besonders gut zur einstückigen Ausbildung der Fahrzeugfensterscheibe 3 und der Lageraufnahme 4 mit ihren sehr unterschiedlichen Funktionen und resultiernden Beanspruchungen.

## Patentansprüche

1. Scheibenwischeranordnung an einem Fahrzeug, insbesondere Kraftfahrzeug, mit einer Fahrzeugfensterscheibe, die einen Durchbruch aufweist, der von einer Wischerarmantriebswelle eines Wischerantriebs durchsetzt wird, wobei die Wischerarmantriebswelle in einem Wischerlager um eine Drehachse drehbar lagert, das in einer Lageraufnahme gehalten wird, die mit der Fahrzeugfensterscheibe verbunden ist, **dadurch gekennzeichnet, dass** die Lageraufnahme (4) einstückig mit der Fahrzeugfensterscheibe (3) ausgebildet ist und aus Kunststoff, insbesondere Polycarbonat, besteht.

2. Scheibenwischeranordnung nach Anspruch 1, **dadurch gekennzeichnet, dass** die Lageraufnahme (4) eine in Richtung der Drehachse (18) der Wischerarmantriebswelle (17) weisende Längserstreckung besitzt, die quer zur Ebene (8) der Fahrzeugfensterscheibe (3) verläuft.

3. Scheibenwischeranordnung nach einem der vorhergehenden Ansprüche, **dadurch gekennzeichnet, dass** die Lageraufnahme (4) ein Lagerrohr (9) ist.

4. Scheibenwischeranordnung nach Anspruch 3, **dadurch gekennzeichnet, dass** das Lagerrohr (9) ein erstes und ein zweites Ende (10,11) aufweist, wobei das erste Ende (10) einstückig mit der Fahrzeugfensterscheibe (3) verbunden ist und das zweite Ende (11) ein freies Ende (12) bildet.

5. Scheibenwischeranordnung nach einem der Ansprüche 3 oder 4, **dadurch gekennzeichnet, dass** in das Innere (14) des Lagerrohrs (9) das Wischerlager (5) eingeschoben ist.

6. Scheibenwischeranordnung nach einem der vorhergehenden Ansprüche, **dadurch gekennzeichnet, dass** das Wischerlager (5) von mindestens zwei in Richtung der Drehachse (18) hintereinander liegenden Lagerelementen (15,16) gebildet ist.

7. Scheibenwischeranordnung nach einem der vorhergehenden Ansprüche, **dadurch gekennzeichnet, dass** die Fahrzeugfensterscheibe (3) und/oder die Lageraufnahme (4) im Bereich des Durchbruchs (6) der Fahrzeugfensterscheibe (3) eine Aufnahmevertiefung (19) für ein Dichtelement (20) zur Abdichtung der Wischerarmantriebswelle (17) aufweist.

8. Scheibenwischeranordnung nach einem der vorhergehenden Ansprüche, **gekennzeichnet durch** eine Axialsicherung (30) zur axialen Sicherung der Wischerarmantriebswelle (17) im Bereich der Lageraufnahme (4) und/oder der Fahrzeugfensterscheibe (3).

## Claims

1. Windscreen wiper arrangement on a vehicle, in particular motor vehicle, with a vehicle window pane which has an aperture through which a wiper-arm drive shaft of a wiper drive is passed, wherein the wiper-arm drive shaft is mounted rotatably about an axis of rotation in a wiper bearing which is held in a bearing receptacle which is connected to the vehicle window pane, **characterized in that** the bearing receptacle (4) is formed integrally with the vehicle window pane (3) and is composed of plastic, in particular polycarbonate.

2. Windscreen wiper arrangement according to Claim 1, **characterized in that** the bearing receptacle (4) has a longitudinal extent which points in the direction of the axis of rotation (18) of the wiper-arm drive shaft (17) and runs transversely with respect to the plane (8) of the vehicle window pane (3).

3. Windscreen wiper arrangement according to either of the preceding claims, **characterized in that** the bearing receptacle (4) is a bearing tube (9).

4. Windscreen wiper arrangement according to Claim 3, **characterized in that** the bearing tube (9) has a first and a second end (10, 11), wherein the first end (10) is connected integrally to the vehicle window pane (3) and the second end (11) forms a free end (12).

5. Windscreen wiper arrangement according to either of Claims 3 or 4, **characterized in that** the wiper bearing (5) is pushed into the interior (14) of the bearing tube (9).

6. Windscreen wiper arrangement according to one of the preceding claims, **characterized in that** the wiper bearing (5) is formed by at least two bearing elements (15, 16) which lie one behind the other in the direction of the axis of rotation (18).

7. Windscreen wiper arrangement according to one of the preceding claims, **characterized in that** the vehicle window pane (3) and/or the bearing receptacle (4) have/has, in the region of the aperture (6) of the vehicle window pane (3), a receiving depression (19) for a sealing element (20) for sealing the wiper-arm drive shaft (17).

8. Windscreen wiper arrangement according to one of the preceding claims, **characterized by** an axial securing means (30) for axially securing the wiper-arm drive shaft (17) in the region of the bearing receptacle (4) and/or of the vehicle window pane (3).

## Revendications

1. Ensemble d'essuie-glace sur un véhicule, en particulier un véhicule automobile, comprenant une vitre de fenêtre de véhicule qui comprend une ouverture qui est traversée par un arbre d'entraînement de bras d'essuie-glace d'un entraînement d'essuie-glace, l'arbre d'entraînement de bras d'essuie-glace étant monté dans un palier d'essuie-glace de manière à pouvoir tourner autour d'un axe de rotation, lequel palier d'essuie-glace est maintenu dans un logement de palier qui est relié à la vitre de fenêtre de véhicule, **caractérisé en ce que** le logement de palier (4) est réalisé d'une seule pièce avec la vitre de fenêtre de véhicule (3) et est constitué de plastique, en particulier de polycarbonate.

2. Ensemble d'essuie-glace selon la revendication 1, **caractérisé en ce que** le logement de palier (4) présente une étendue longitudinale orientée dans la direction de l'axe de rotation (18) de l'arbre d'entraînement de bras d'essuie-glace (17), laquelle étendue longitudinale s'étend transversalement par rapport au plan (8) de la vitre de fenêtre de véhicule (3).

3. Ensemble d'essuie-glace selon l'une quelconque des revendications précédentes, **caractérisé en ce que** le logement de palier (4) est un tube de palier (9).

4. Ensemble d'essuie-glace selon la revendication 3, **caractérisé en ce que** le tube de palier (9) comprend une première et une deuxième extrémité (10, 11), la première extrémité (10) étant reliée d'une seule pièce à la vitre de fenêtre de véhicule (3) et la deuxième extrémité (11) formant une extrémité libre (12).

5. Ensemble d'essuie-glace selon la revendication 3 ou 4, **caractérisé en ce que** le palier d'essuie-glace (5) est inséré dans l'intérieur (14) du tube de palier (9).

6. Ensemble d'essuie-glace selon l'une quelconque des revendications précédentes, **caractérisé en ce que** le palier d'essuie-glace (5) est formé par au moins deux éléments de palier (15, 16) situés l'un derrière l'autre dans la direction de l'axe de rotation (18).

7. Ensemble d'essuie-glace selon l'une quelconque des revendications précédentes, **caractérisé en ce que** la vitre de fenêtre de véhicule (3) et/ou le logement de palier (4) présente(nt), dans la région de l'ouverture (6) de la vitre de fenêtre de véhicule (3), un renfoncement de réception (19) pour un élément d'étanchéité (20) pour réaliser l'étanchéité de l'arbre d'entraînement de bras d'essuie-glace (17).

8. Ensemble d'essuie-glace selon l'une quelconque des revendications précédentes, **caractérisé par** une fixation axiale (30) pour fixer axialement l'arbre d'entraînement de bras d'essuie-glace (17) dans la région du logement de palier (4) et/ou de la vitre de fenêtre de véhicule (3).
